# EUROPEAN PATENT APPLICATION

(11) **EP 1 251 022 A1**
(43) Date of publication of application: **23.10.2002**
(21) Application number: 01109687.2
(22) Date of filing: 19.04.2001
(51) Int. Cl.: B60K 1/00, B60K 1/04, B60L 11/18, H01M 8/06, H01M 8/04

(54) **Vehicle with a fuel cell device**

(71) Applicant: YAMAHA HATSUDOKI KABUSHIKI KAISHA, Iwata-shi Shizuoka-ken (JP)
(72) Inventor: Mizuno, Yutaka, c/o Yamaha Hatsudoki K.K., Iwata-shi, Shizuoka-ken (JP); Kuranishi, Masahisa, c/o Yamaha Hatsudoki K.K., Iwata-shi, Shizuoka-ken (JP)
(74) Representative: Grünecker, Kinkeldey, Stockmair & Schwanhäusser Anwaltssozietät

(57) **Abstract**

A vehicle with a fuel cell device, wherein a water tank means and supply means for supplying water accommodated in said water tank means to the fuel cell device are provided, and at least one device which generates heat is provided for warming up said water, and/or said a fuel cell device comprises a reformer and fuel supply means for supplying fuel to said reformer, and at least one device which generates heat and means for warming the fuel by the heat generated by said device are provided:

## Description

The present invention relates to a vehicle with a fuel cell device. In particular, to a vehicle which can effectively utilize heat generated by heat generating devices mounted thereon.

As an example of a fuel cell device, there is a device in which a feedstock such as methanol is reformed by a reformer (a reforming device) to produce hydrogen gas which is supplied to a cell stack body to generate electricity after CO therein has been reduced by a CO reducing device (a selective oxidation reactor). There has been a thought to mount a fuel cell driving system for driving an electric motor and for charging a battery with the electricity generated by such a fuel cell device on a vehicle such as a motorcycle and a motortricycle.

When such a fuel cell driving system is mounted on a motorcycle or a motortricycle, it is required to effectively utilize heat generated by the fuel cell device, the battery, the electric motor and so on, which generate relatively much heat.

It is an objective of the present invention to provide a vehicle with a fuel cell device having a high energetic efficiency.

According to the present invention said objective is solved by a vehicle with a fuel cell device, wherein a water tank means and supply means for supplying water accommodated in said water tank means to the fuel cell device are provided, and at least one device which generates heat is provided for warming up said water, and/or said a fuel cell device comprises a reformer and fuel supply means for supplying fuel to said reformer, and at least one device which generates heat and means for warming the fuel by the heat generated by said device are provided.

It is an advantage of the present invention to provide a vehicle with a fuel cell device or a fuel cell driving system, which can effectively utilize heat generated by heat generating devices mounted thereon.

Preferred embodiments of the present invention are laid down in the dependent claims.

In the following, the present invention is explained in greater detail with respect to several embodiments thereof in conjunction with the accompanying drawings, wherein:
- Fig. 1: is a block diagram of a fuel cell driving system according to a first embodiment,
- Fig. 2: is a plan view of a motorcycle provided with the fuel cell driving system,
- Fig. 3: is a side view of a motorcycle provided with the fuel cell driving system,
- Fig. 4: is a block diagram of a fuel cell driving system according to a second embodiment,
- Fig. 5: is a side view of a motorcycle provided with the fuel cell driving system,
- Fig. 6: is a flowchart for explaining the operation of the fuel cell driving system,
- Fig. 7: is a flowchart for explaining the operation of the fuel cell driving system, and
- Fig. 8: is a flowchart for explaining the operation of the fuel cell driving system.

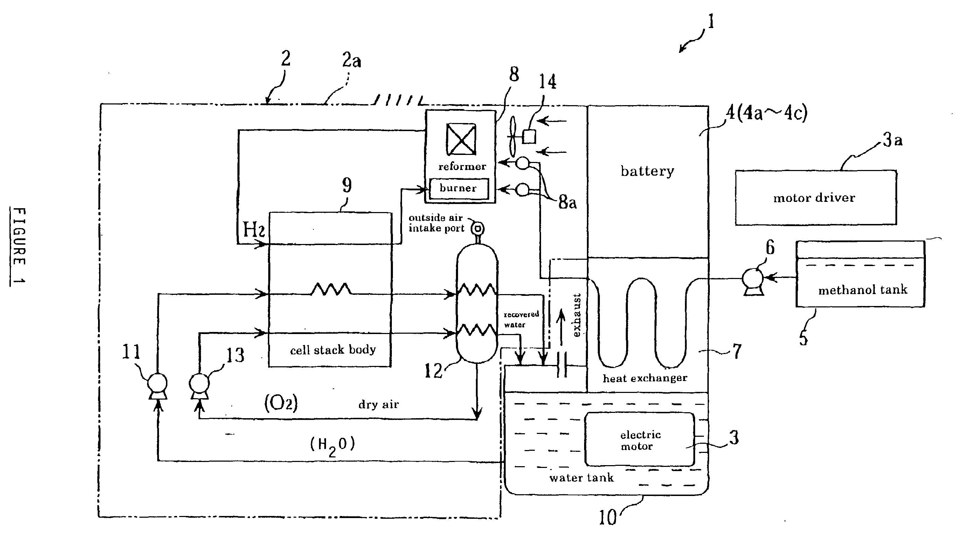

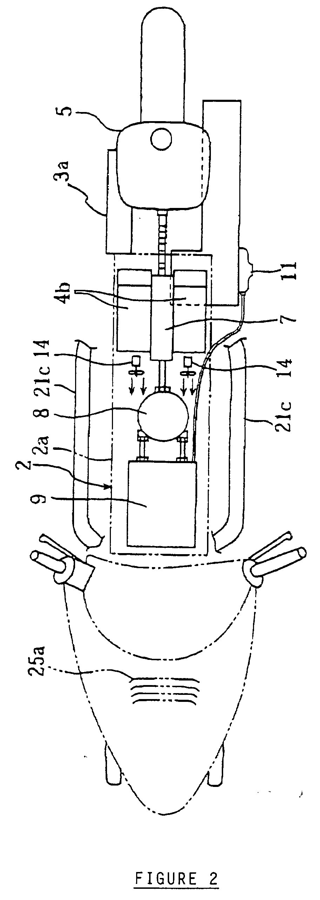

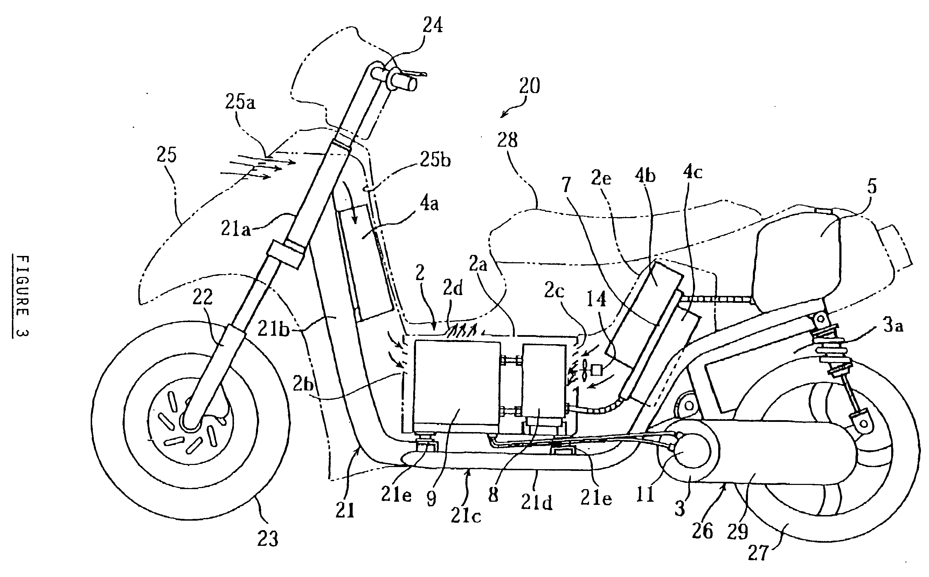

Fig. 1 to Fig. 3 are views for explaining a motorcycle mounting a fuel cell driving system according to one embodiment. Fig. 1 is a block diagram of the fuel cell driving system, and Fig. 2 and Fig. 3 are schematic plan view and a side view, respectively, of the motorcycle mounting the fuel cell driving system.

In Fig. 1, designated as 1 is a fuel cell driving system, which is constituted to supply electricity generated by a fuel cell device 2 to an electric motor 3 via a motor driver 3a and to charge a battery 4 with the electricity. Said electric motor 3, said motor driver 3a and said battery 4 are devices which generates heat. In the fuel cell device 2, methanol (feedstock) in a methanol tank 5 is supplied to a reformer 8 via a heat exchanger 7 by a pump 6 with its flow amount being adjusted by a flow-amount adjusting valve 8a, and hydrogen gas produced in the reformer 8 is supplied via a CO reducing device (not shown) to a cell stack body 9, by which electricity is generated.

In the reformer 8, a mixed fuel of methanol and water is supplied to an evaporator provided therein and is heated and evaporated with a burner disposed therewithin to produce hydrogen gas. The produced hydrogen gas is supplied to the cell stack body 9 after CO therein has been reduced by the CO reducing device.

Water in a water tank 10 is sucked by a water pump 11 for humidification and supplied to the cell stack body 9, to which outside air sucked by a blowing fan 13 through a heat exchanger 12 for capturing moisture is also supplied, so that electricity is generated therein. Said water tank 10 is part of a water tank means.

In Fig. 2 and Fig. 3, designated as 20 is a motorcycle mounting the fuel cell driving system 1. The motorcycle has a body frame 21 including a head pipe 21a at the front end, a main pipe 21b extending backward and downward from the head pipe 21a, and a pair of side pipes 21c and 21c connected to a lower end of the main pipe 21b, generally horizontally extending backward forming low-floor foot rests 21d and extending backward and upward.

A front fork 22 is steerably supported by the head pipe 21. A front wheel 23 is rotatably supported at the lower end of the front fork 22, to which a steering handle 24 is secured at the upper end thereof. A seat 28 is mounted above the side pipes 21c. A resin body cover 25 surrounds the front fork 22 and covers the right and the left sides of the body frame 21.

The swing type motor unit 26 is pivoted at the front end to the backward and upward extended portion of the side pipes 21c. A rear wheel 27 is rotatably supported at the rear end of the motor unit 26. The motor unit 26 is a combination of the motor 3 disposed toward a width direction of the body and a transmission case 29 extending backward along a side of the vehicle in one. The motor 3 is a water-cooled type surrounded by a water jacket, which functions as the water tank 10.

The reformer 8 and the cell stack body 9 accommodated and unitized in a casing 2a are mounted on supporting frames 21e and 21e laid between the footrests 21d and 21d on both right and left sides of the body frame 21. The casing 2a has an air introduction port 2b in the front wall thereof, an air supply port 2c in the rear wall thereof, and an air exhaust port 2d in the top wall thereof. Cooling fans 14 for supplying cooling air into the casing 2a are disposed at the air supply port 2c.

The battery 4 is divided into six parts; front batteries 4a and 4a, upper batteries 4b and 4b, and lower batteries 4c and 4c. The front batteries 4a and 4a are disposed in an air introduction duct 25b for introducing running air introduced from an air intake 25a of the body cover 25 into the casing 2a. The upper and lower batteries 4b and 4c are disposed on a rising part 21f at the rear of the body frame 21. The heat exchanger 7 is interposed between the upper batteries 4b and between lower batteries 4c.

The upper and lower batteries 4b and 4c, the heat exchanger 7 and the cooling fans 14 are surrounded by a backward extended portion 2e of the casing 2a. Cooling air sucked by the cooling fans 14 flows forward while cooling around the upper and lower batteries 4b and 4c and is supplied into the casing 2a from the cooling air supply port 2c.

In the motorcycle 20 of this embodiment, the fuel cell device 2 is not activated when the vehicle starts running. Thus, at first, electric power is supplied from the batteries 4a to 4c to the electric motor 3, by which the rear wheel is driven and the vehicle runs. Then, methanol in the methanol tank 5, which absorbs heat from the upper and lower batteries 4b and 4c while passing through the heat exchanger 7, is supplied to the reformer 8, and hydrogen gas produced by the reformer 8 is supplied to the cell stack body 9. Outside air sucked by the blowing fan 13 is dried while passing through the heat exchanger 12 for capturing moisture and supplied to the cell stack body 9. Water warmed by the heat generated by the motor 3 in the water tank 10 is also supplied to the cell stack body 9 by the pump 11 for humidifying water. The water having passed through the cell stack body 9 is returned to the water tank 10.

The outside air sucked by the cooling fans 14 cools the upper and lower batteries 4b and 4c, and the air whose temperature has been raised by this cooling is supplied to the burner of the heater of the reformer 8. After the fuel cell device 2 has met conditions required for activation, electric power generated by the fuel cell device 2 is supplied to the electric motor 3.

In the device of this embodiment, a water cooling system in which the electric motor 3 is accommodated in the water tank 10 is employed, and water warmed by heat generated by the motor 3 is supplied to the cell stack body 9 so that the time needed to activate the fuel cell device 2 can be shortened. Also, since fuel warmed by heat from the batteries 4a and 4c is supplied to the reformer 8, time needed for the activation can be shortened in this respect.

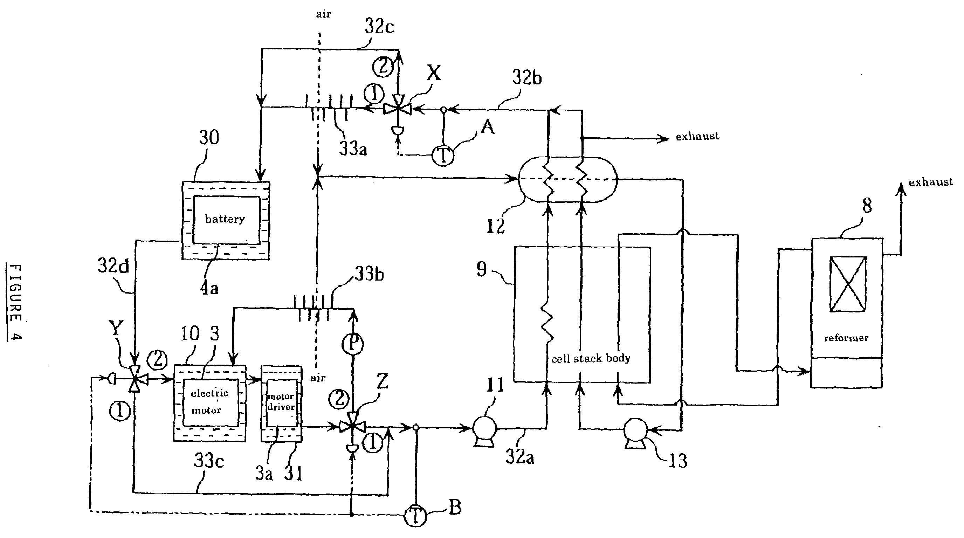

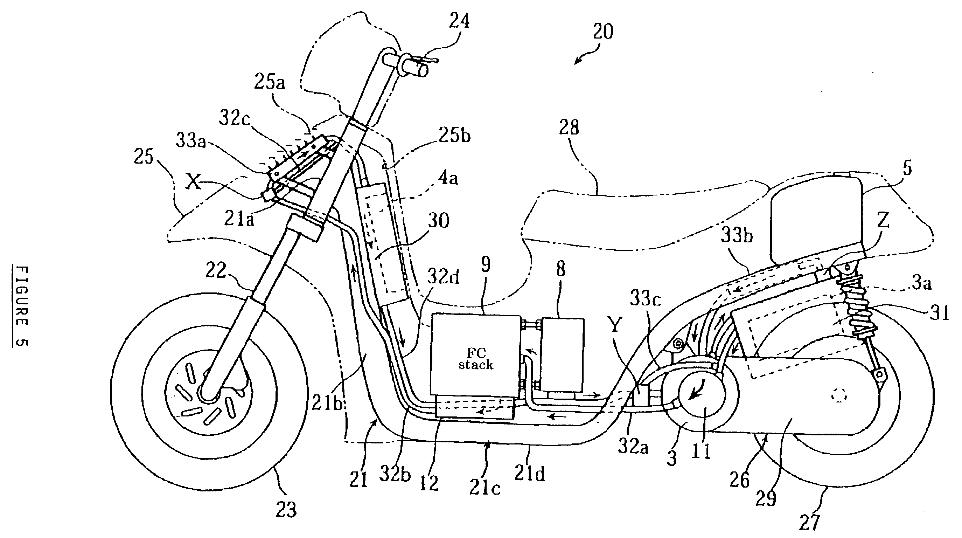

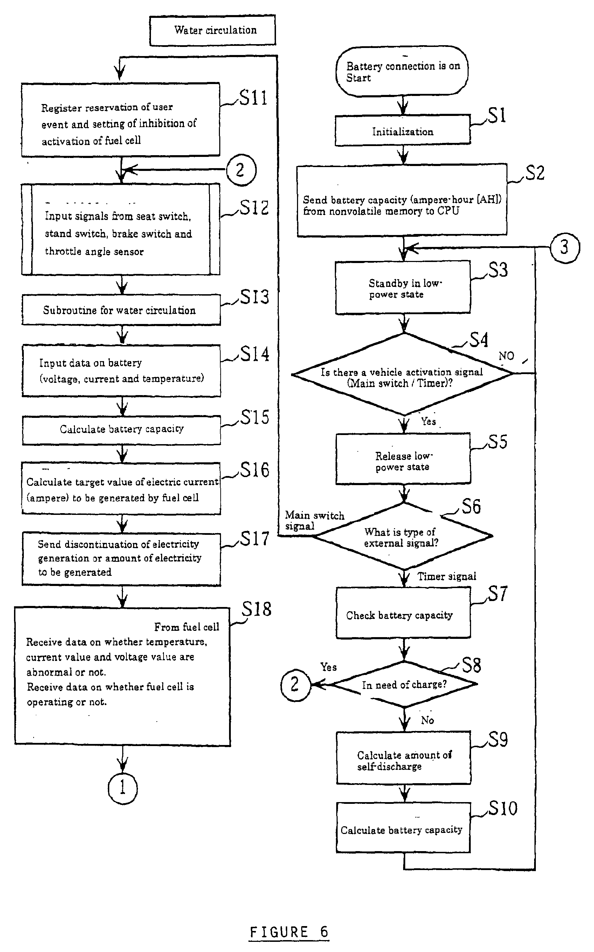

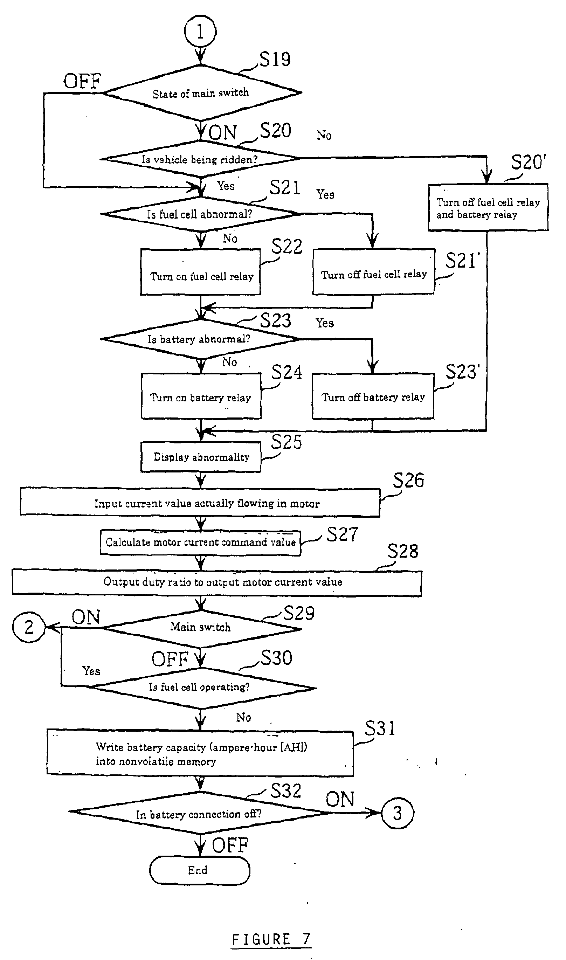

Fig. 4 to Fig. 8 are views for explaining a fuel cell driving system according to a second embodiment. Fig. 4 is a block diagram of the system, Fig. 5 is a motorcycle mounting the system, and Fig. 6 to Fig. 8 are flowcharts for explaining the operation. In the drawings, the same numerals as in Fig. 1 to Fig. 3 represent the same or corresponding parts.

In this embodiment, the battery 4a, the electric motor 3 and the motor driver 3a are accommodated in a battery water tank 30, a motor water tank (a water cooling jacket) 10, and a motor driver water tank 31, respectively. Said battery water tank 30, said motor water tank 10, and said motor driver water tank 31 are parts of the water tank means.

The battery water tank 30 is disposed in an air introduction duct 25b formed in the body cover 25. The cell stack body 9 and the reformer 8 are unitized and mounted on the footrests 21d. Running air warmed by heat from the battery water tank 30 is introduced around the cell stack body 9 and the reformer 8.

The water pump 11 is attached to the left side of the water tank 10 part of the motor unit 26. The driver water tank 31 is disposed on the right side of the rear wheel 27. The radiator 33b is disposed above the rear wheel 27.

Water discharged from the water pump 11 is supplied through a water supply passageway 32a disposed along the foot rests 21d of the body frame 21 to the cell stack body 9, where a part of which is consumed, passes through the heat exchanger 12 for capturing moisture and through water supply passageways 32b and 32c disposed along the main pipe 21 b of the body frame 21, and is supplied to the battery water tank 30 in the air introduction duct 25b. The water then passes through a water supply passageway 32d, is supplied from the motor water tank 10 to the driver water tank 31, and is returned to the water pump 11.

A radiator 33a is connected for by-passing the water supply passageway 32c and disposed at the air intake 25a in the body frame 25. A three-way valve X is disposed in the water supply passageway 32c at the branch point upstream of the radiator 33. A temperature sensor A is disposed on the upstream side of the three-way valve X and the opening direction of the three-way valve X is controlled on the basis of a temperature detected by the water temperature sensor A.

A by-pass passageway 33c is connected by-passing the motor water tank 10 and the driver water tank 31, and a three-way valve Y is disposed at the upstream branch point thereof. The downstream side of the driver water tank 31 is connected to the motor water tank 10 by-passing in the returning direction with a radiator 33b disposed therebetween. A three-way valve Z is disposed at a branch point of the radiator 33b downstream of the driver water tank 31.

A temperature sensor B is disposed downstream of the downstream branch point of the by-pass passageway 33c, and the opening directions of the three-way valves Y and Z are controlled on the basis of a temperature detected by the temperature sensor B.

In this embodiment, water discharged from the pump 11 is switched to the water supply passageway 32c when a temperature detected by the temperature sensor A is a set temperature or lower, and to the radiator 33a when the temperature is higher the set temperature by the three-way valve X. Water having passed through the battery water tank 30 is switched to the by-pass passageway 33c when a temperature detected by the temperature sensor B is a set temperature or higher, and to the motor water tank 10 and the driver water tank 31 when the temperature is lower than the set temperature by the three-way valve Y. When water is passing through the by-pass passageway 33c, water in the motor water tank 10 and the driver water tank 31 is circulated through the radiator 33b by the three-way valve Z.

Though not shown, there may be provided a by-pass passageway by-passing the battery water tank, a three-way valve at the upstream branch point thereof and a temperature sensor at the downstream thereof so that water may pass through the by-pass passageway when a temperature detected by the temperature sensor is a predetermined temperature or higher.

Next, the operation of this embodiment will be described with reference to the flowcharts in Fig. 6 to Fig. 8. Though not shown, the motorcycle of this embodiment is equipped with an FC controller for controlling the fuel cell device 2, and a vehicle controller for controlling the electric motor 3, and the control operation described hereinbelow is executed while necessary data are sent and received between both controllers.

When the control flow starts, various abnormality flags and numeric values are initialized (step S1), the battery capacity (ampere-hour [AH]) at the moment is read from an on-board nonvolatile memory, and the system is brought into a low-power standby state (steps S2 and S3). A low-power state here is a state in which a low power necessary to ensure a standby state of the control is applied.

Then, the presence or absence of a vehicle activation signal (a main switch on-off signal, a timer signal, etc.) is determined. When there is no signal, the low-power stand-by state is continued, and when there is a signal, the low-power state is released (steps S4 and S5). The timer signal here is an activation signal which is sent in every given period of time to activate the fuel cell device 2 to fully charge the battery for the next run even while the vehicle is not running.

When the vehicle activation signal is a timer signal, the battery capacity is detected. When the battery is determined not to be in need of charge, an amount of self-discharge thereof is calculated (steps S7 to S10), and the process goes back to step S3. On the other hand, when the vehicle activation signal is a signal representing that the main switch is turned on, various kind of registrations such as a reservation of a user event, setting of inhibition of activation of the fuel cell device 2 are executed (step S11), signals from a seat switch, a stand switch, a brake switch, throttle angle sensor and so on are read, and a subroutine for water circulation (described later) is executed on the basis of the detected values (steps S 12 to S13). When the battery is determined to be in need of charge, the process goes to step S12.

Data on the battery (voltage, current, temperature) are read to calculate the capacity thereof, and the optimum target value of electric current to be generated according to the temperature of the battery (step S12 to S13). After that, discontinuation of electricity generation or the amount of electricity to be generated is sent to the fuel cell device side while data on presence or absence of abnormality in temperature, current value, voltage value etc., on whether the fuel cell device is operating or not, and so on are received from the fuel cell device side (step S16 to S18).

Then the state of the main switch is determined (step S19). When the main switch is on, whether the vehicle is being ridden or not is determined on the basis of the detection results of the seat switch, the stand switch and the brake switch in step S12 (step S20). When the vehicle is being ridden, the presence or absence of an abnormality in the fuel cell device 2 is determined on the basis of detection result in step S18. When there is no abnormality, a relay of the fuel cell device is turned on (steps S21 and S22). Also, the presence or absence of an abnormality in the battery is determined on the basis of the detection result in step S14. When no abnormality is in the battery, a battery relay is turned on and an abnormality displaying process is executed (steps S23 to S25).

When the vehicle is not being ridden in step S20, namely, when the vehicle has been got off, both the relays of the battery and the fuel cell device are turned off (step S20'). When there is an abnormality in the fuel cell device 2 in step S21, the relay of the fuel cell device is turned off (step S21'). When there is an abnormality in the battery in step S23, the battery relay is turned off (step S23').

Then, a current value actually flowing in the motor is inputted, a motor current command value is calculated on the basis of the inputted current value and the throttle angle value detected in step S12 etc., and a duty ratio for outputting the motor current value is outputted (step S26 to S28).

When the main switch is on, or when the main switch is off and the fuel cell device 2 is operating, the process goes to step S12. On the other hand, the main switch is off and the fuel cell device has been stopped, the value of the battery capacity is written into the non-volatile memory (step S29 to S31). When the battery is in connected state, the process goes back to step S3, and when the battery is not in connected state, the process is terminated (step S32).

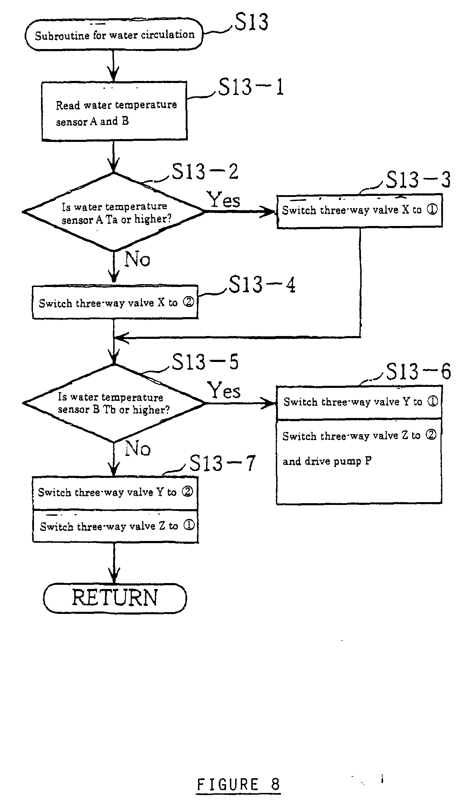

In the subroutine for water circulation, as shown in Fig. 8, temperatures detected by the temperature sensors A and B are read at first. When the temperature detected by the temperature sensor A disposed upstream of the battery water tank 30 is a predetermined temperature Ta (80°C, for example) or higher, an outlet ① of the three-way valve X is opened so that water is supplied to the battery water tank 30 after having radiated heat in the radiator 33a (steps S13-1 to S13-3).

When the temperature detected by the temperature sensor A is not a predetermined temperature Ta or higher, an outlet ② of the three-way valve X is opened so that water is directly supplied to the battery water tank 30 (step S13-4). Then, when a temperature detected by the temperature sensor B is a predetermined temperature Tb (90°C, for example) or higher, an outlet ① of the three-way valve Y and an outlet ② of the three-way valve Z are opened (steps S13-5 to S13-6) so that water having passed through the battery water tank 30 is supplied through the by-pass passageway 33c to the cell stack body 9 without passing through the water tanks 10 and 31. In this case, water in the motor water tank 10 and the motor driver water tank 31 is circulated through the radiator 33b and radiates heat.

On the other hand, when the temperature detected by the temperature sensor B is not the predetermined temperature Tb or higher, an outlet ② of the three-way valve Y and an outlet ① of the three-way valve Z are opened (step S13-7) so that water having passed through the battery water tank 30 is supplied to the cell stack body 9 after having passed through the motor water tank 10 and the driver water tank 30 and having been warmed further.

In the second embodiment, the battery water tank 30, the motor water tank 10 and the driver water tank 31 are connected in series so that water can be warmed effectively using heat generated by the battery 4, electric motor 3 and the motor driver 3a, and the time needed to activate the fuel cell device 2 can be shortened by supplying the water warmed as above to the cell stack body 9.

As for the battery water tank 10 and the driver water tank 31, since the by-pass passageway 33c is provided so that water may be supplied directly to the cell stack body 9 by-passing the water tanks 10 and 31 when the temperature of the water to be supplied to the cell stack body 9 is a predetermined temperature or higher, the temperature of the water to be supplied to the cell stack body 9 can be prevented from abnormally rising and thus the durability of the cell sack body 9 is not reduced. Incidentally, the cell stack body 9 in this embodiment is provided with an ion-exchange resin membrane therein, and the durability thereof is reduced when its temperature is a certain temperature or higher.

In this embodiment, since a part of water having supplied to the cell stack body 9 and a part of water produced in the cell stack body 9 are returned to the water tanks and water in the tanks is supplied to the cell stack body 9, water to be supplied to the cell stack body can be secured easily.

According to the embodiments described above the vehicle mounting a fuel cell driving system comprises at least one of heat generating devices mounted on the vehicle such as a battery, a motor and a motor driver accommodated in a water tank. Water in the water tank is warmed by the heat generated by the heat generating devices and supplied to a cell stack body of a fuel cell device.

Since heat generating devices such as a battery, a motor and a motor driver are accommodated in water tanks and water warmed by heat generated by the devices in the water tanks is supplied to the cell stack body of the fuel cell device, the time needed to activate the fuel cell device can be shortened.

According to the embodiments, a part of water having supplied to the cell stack body is returned to the water tank.

Since a part of water having supplied to the cell stack body is returned to the water tank, water to be supplied to the cell stack body can be easily secured. Namely, water in the water tank to be supplied to the cell stack body, which gradually decreases, must be added from time to time, but, in this invention, the amount of water to be added can be reduced for the returning water.

A by-pass passageway for by-passing the water tank and for supplying water returning to the water tank directly to the cell stack body is provided.

Since a by-pass passageway for by-passing the water tank and for supplying water returning to the water tank around directly to the cell stack body, the temperature of the water to be supplied to the cell stack body can be prevented from abnormally rising by passing the water through the by-pass passageway when the temperature in the water tank is unnecessarily raised.

According to the embodiments the vehicle mounting a fuel cell driving system comprises at least one of heat generating devices mounted on the vehicle such as a battery, a motor and a motor driver accommodated in a water tank. Water in the water tank is warmed by the heat generated by the heat generating devices is supplied to a reformer of a fuel cell device.

Since heat generating devices such as a battery, a motor and a motor driver are accommodated in water tanks and water warmed by heat generated by the devices in the water tanks is supplied to a reformer, the time needed to activate the fuel cell device can be shortened.

According to the embodiments, the battery is accommodated in a battery water tank, that at least one of the motor and the motor driver is accommodated in a different water tank, that the battery water tank is disposed upstream of the different water tank, and that a water supply tube for supplying water in the water tanks to the cell stack body or the reformer is provided.

Since the battery water tank is disposed upstream of a different water tank accommodating at least one of the motor and the motor driver, and since water in the water tanks is supplied to the cell stack body or the reformer, the water is warmed by heat generated by the battery at first and then by heat generated by the motor etc. whose temperature is higher than that of the battery, the water can be efficiently warmed and the heat generating devices can be efficiently cooled.

Moreover, the vehicle mounting a fuel cell driving system according to the embodiments provides fuel warmed by heat generated by at least one of heat generating devices mounted on the vehicle such as a battery, a motor and a motor driver is supplied to the reformer of a fuel cell device.

Since fuel warmed by heat generated by the heat generating devices is supplied to the reformer, the time needed to activate the fuel cell can be shortened.

With regard to the embodiments mentioned above a vehicle with a fuel cell device 2 is provided, wherein a water tank means 10, 30, 31 and supply means for supplying water accommodated in said water tank means 10, 30, 31 to the fuel cell device 2 are provided, and at least one device 4, 4a-4c, 3, 3a which generates heat is provided for warming up said water. Alternatively or additionally, said such a vehicle with a fuel cell device 2 comprises a reformer 8 and fuel supply means for supplying fuel to said reformer 8, and at least one device 4b, 4c which generates heat and means for warming the fuel by the heat generated by said device 4b, 4c are provided.

According to at least one of the embodiments a vehicle with a fuel cell device is provided, wherein said fuel cell device 2 comprises a cell stack body 9, the device 4a, 3, 3a which generates heat is accommodated in a water tank 10, 30, 31 of the water tank means, and the supply means are provided for supplying water accommodated in said water tank 10, 30, 31 and warmed by the heat generated by said devices 4a, 3, 3a to the cell stack body 9 of a fuel cell device 2. Alternatively or additionally, said a fuel cell device 2 comprises a reformer 8, wherein the device 4, 4a-4c, 3, 3a which generates heat is accommodated in a water tank 10, 30, 31 of the water tank means, and the supply means are provided for supplying water accommodated in said water tank 10, 30, 31 and warmed by the heat generated by said devices 4, 4a-4c, 3, 3a to the reformer 8 of a fuel cell device 2.

According to the embodiments, means are provided for supplying at least a part of water having supplied to said cell stack body 9 returned to said water tank 10, 30, 31. A by-pass passageway 33c is provided for by-passing said water tank 10,31 and for supplying the water returning to said water tank 10, 31 directly to said cell stack body 9.

Said supply means for supplying water comprises sensor means A, B and valve means X, Y, Z for controlling said water flow.

According to the embodiments, a plurality of devices which generates heat are provided, a first device 4a is accommodated in a first water tank 30, and at least one second device 3, 3a is accommodated in a further water tank means 10, 31, wherein said first water tank 4a is disposed upstream of said further water tank means 10, 31 and means are provided for supplying water from said first water tank 4a to said further water tank means 10, 31 and a water supply means is provided for supplying water in said water tanks to said cell stack body 9 or said reformer 8. Said further water tank means comprises a second water tank 10 and a third water tank 31, wherein a device 3, 3a which generates heat is accommodated in each of said second and third water tanks.

According to the embodiments, said first device is a battery 4a and said first tank is a battery water tank 30, and said second device is at least one of a motor 3 and a motor driver 3a.

According to an embodiment, at least a first and a second device 4b, 4c which generates heat is provided and the means for warming the fuel comprises a heat exchanger 7 provided within a fuel supply pipe, wherein said heat exchanger 7 is interposed between said first and second devices 4b, 4c.

As can be taken from the embodiments, the device which generates heat is a battery 4,4a-4c and/or a motor 3 and/or motor driver 3a.

## Claims

1. A vehicle with a fuel cell device (2), wherein a water tank means (10, 30, 31) and supply means for supplying water accommodated in said water tank means (10, 30, 31) to the fuel cell device (2) are provided, and at least one device (4, 4a-4c, 3, 3a) which generates heat is provided for warming up said water, and/or
said a fuel cell device (2) comprises a reformer (8) and fuel supply means for supplying fuel to said reformer (8), and at least one device (4b, 4c) which generates heat and means for warming the fuel by the heat generated by said device (4b, 4c) are provided.

2. A vehicle with a fuel cell device according to claim 1, **characterized in that** said fuel cell device (2) comprises a cell stack body (9) the device (4a, 3, 3a) which generates heat is accommodated in a water tank (10, 30, 31) of the water tank means, and the supply means are provided for supplying water accommodated in said water tank (10, 30, 31) and warmed by the heat generated by said devices (4a, 3, 3a) to the cell stack body (9) of a fuel cell device (2), and/or said a fuel cell device (2) comprises a reformer (8), wherein the device (4, 4a-4c, 3, 3a) which generates heat is accommodated in a water tank (10, 30, 31) of the water tank means, and the supply means are provided for supplying water accommodated in said water tank (10, 30, 31) and warmed by the heat generated by said devices (4, 4a-4c, 3, 3a) to the reformer (8) of a fuel cell device (2).

3. A vehicle with a fuel cell device according to claim 1 or 2, **characterized in that** means are provided for supplying at least a part of water having supplied to said cell stack body (9) returned to said water tank (10, 30, 31).

4. A vehicle with a fuel cell device according to claim 3, **characterized by** a by-pass passageway (33c) for by-passing said water tank (10,31) and for supplying the water returning to said water tank (10, 31) directly to said cell stack body (9).

5. A vehicle with a fuel cell device according to at least one of the claims 1 to 4, **characterized in that** said supply means for supplying water comprises sensor means (A, B) and valve means (X, Y, Z) for controlling said water flow.

6. A vehicle with a fuel cell device according to at least one of the claims 1 to 5, **characterized in that** a plurality of devices which generates heat are provided, a first device (4a) is accommodated in a first water tank (30), and at least one second device (3, 3a) is accommodated in a further water tank means (10, 31), wherein said first water tank (4a) is disposed upstream of said further water tank means (10, 31) and means are provided for supplying water from said first water tank (4a) to said further water tank means (10, 31) and a water supply means is provided for supplying water in said water tanks to said cell stack body (9) or said reformer (8).

7. A vehicle with a fuel cell device according to claim 6, **characterized in that** said further water tank means comprises a second water tank (10) and a third water tank (31), wherein a device (3, 3a) which generates heat is accommodated in each of said second and third water tanks.

8. A vehicle with a fuel cell device according to claim 6 or 7, **characterized in that** said first device is a battery (4a) and said first tank is a battery water tank (30), and said second device is at least one of a motor (3) and a motor driver (3a).

9. A vehicle with a fuel cell device according to at least one of claims 1 to 8, **characterized in that** at least a first and a second device (4b, 4c) which generates heat is provided and the means for warming the fuel comprises a heat exchanger (7) provided within a fuel supply pipe, wherein said heat exchanger (7) is interposed between said first and second devices (4b, 4c).

10. A vehicle with a fuel cell device according to at least one of claims 1 to 9, **characterized in that** the device which generates heat is a battery (4,4a-4c) and/or a motor (3) and/or motor driver (3a).
